(19) Europäisches Patentamt
European Patent Office
Office européen des brevets

(11) **EP 4 277 820 B1**

(12) **FASCICULE DE BREVET EUROPEEN**

(45) Date de publication et mention
de la délivrance du brevet:
**09.10.2024 Bulletin 2024/41**

(21) Numéro de dépôt: **21840076.0**

(22) Date de dépôt: **01.12.2021**

(51) Classification Internationale des Brevets (IPC):
***B60W 30/14*** *(2006.01)*

(52) Classification Coopérative des Brevets (CPC):
**B60W 30/14;** B60W 2520/10; B60W 2520/105;
B60W 2554/4042; B60W 2554/802; B60W 2556/10;
B60W 2720/106; Y02T 10/72

(86) Numéro de dépôt international:
**PCT/FR2021/052166**

(87) Numéro de publication internationale:
**WO 2022/152983 (21.07.2022 Gazette 2022/29)**

(54) **PROCÉDÉ ET DISPOSITIF DE CONTRÔLE D'ACCÉLÉRATION D'UN VÉHICULE**

VERFAHREN UND VORRICHTUNG ZUR STEUERUNG DER BESCHLEUNIGUNG EINES FAHRZEUGS

METHOD AND DEVICE FOR CONTROLLING THE ACCELERATION OF A VEHICLE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **14.01.2021 FR 2100361**

(43) Date de publication de la demande:
**22.11.2023 Bulletin 2023/47**

(73) Titulaire: **Stellantis Auto SAS
78300 Poissy (FR)**

(72) Inventeurs:
• **VIVET, Luc
75016 Paris 16 (FR)**
• **OUANEZAR, Sofiane
78580 Maule (FR)**

(56) Documents cités:
**EP-A1- 3 335 955      EP-A1- 3 604 066
US-A1- 2015 291 163   US-A1- 2015 307 100**

EP 4 277 820 B1

**Description**

**Domaine technique**

L'invention concerne les procédés et dispositifs de contrôle d'accélération d'un véhicule, notamment un véhicule automobile. L'invention concerne également un procédé et un dispositif de contrôle d'un véhicule, notamment un contrôle d'un système de régulation adaptative de vitesse d'un véhicule.

**Arrière-plan technologique**

Certains véhicules contemporains sont équipés de fonctions ou système(s) ou d'aide à la conduite, dit ADAS (de l'anglais « Advanced Driver-Assistance System » ou en français « Système d'aide à la conduite avancé »). Parmi ces systèmes, le système de régulation adaptative de vitesse, dit ACC (de l'anglais « Adaptive Cruise Control ») a pour fonction première la régulation automatiquement, de façon adaptative, de la vitesse des véhicules qui en sont équipés en fonction de leur environnement. Un tel système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule. Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire. La ou les consignes d'accélération sont par exemple déterminées à partir d'une loi de commande basée sur des estimations du couple fourni par un groupe motopropulseur (par exemple un moteur thermique ou électrique) à une ou plusieurs roues du véhicule et de l'accélération courante du véhicule.

On connait par le document US 2015/291163 A1 un système et un procédé de régulateur de vitesse adaptatif s'enclenchant avec un système d'assistance de maintien de voie. On connait par le document EP 3604066 A1 un procédé, un appareil et un système de commande de vitesse de suivi de véhicule. On connait par le document US 2015/307100 A1 un contrôleur de véhicule qui prédit le comportement du véhicule hôte et du véhicule précédent. On connait par le document EP 3335955 A1 une assistance au conducteur d'un véhicule incliné.

Les informations d'environnement d'un véhicule sont par exemple obtenues de capteurs embarqués dans le véhicule, tels que des radars par exemple. Ces informations sont particulièrement importantes pour un véhicule, par exemple pour améliorer la sécurité du véhicule en prenant en compte l'environnement qui l'entoure, notamment les autres véhicules.

Le confort des passagers d'un véhicule est un autre facteur important, notamment pour l'acceptation des systèmes d'aide à la conduite des véhicules. Par exemple, une accélération ou une décélération trop importante est une cause d'inconfort pour les passagers d'un véhicule, notamment lorsque l'accélération est contrôlée par un système ACC. Le compromis entre le confort et la sécurité des passagers est parfois difficile à trouver.

**Résumé de l'invention**

Un objet de la présente invention est d'améliorer le confort du ou des passagers d'un véhicule tout en garantissant un niveau de sécurité suffisant.

Un autre objet de la présente invention est d'améliorer la sécurité d'un véhicule en améliorant la connaissance de son environnement.

Selon un premier aspect, l'invention concerne un procédé de contrôle d'accélération d'un véhicule, le procédé étant mis en oeuvre par au moins un calculateur embarqué dans le véhicule et comprenant les étapes suivantes :

- détermination d'une valeur d'accélération cible à un instant courant destinée à un système de régulation adaptative de vitesse du véhicule, la valeur d'accélération cible étant déterminée à partir de données représentatives d'un objet mobile à une distance déterminée devant le véhicule, les données étant reçues d'au moins un capteur de détection d'objet embarqué dans le véhicule ;
- comparaison de la valeur d'accélération cible avec une première consigne d'accélération fournie au système de régulation adaptative de vitesse à un instant précédant l'instant courant ;
- détermination d'une deuxième consigne d'accélération pour l'instant courant en fonction d'un résultat de la comparaison, la deuxième consigne d'accélération étant fonction d'un résultat de comparaison entre d'une part la valeur d'accélération cible et d'autre part la première consigne d'accélération modifiée en fonction d'une variation d'accélération, dite valeur de secousse, la valeur de secousse étant fonction d'une information représentative d'un niveau de dangerosité d'une situation dans laquelle se trouve le véhicule vis-à-vis de l'objet mobile.

Selon une variante, lorsque la valeur d'accélération cible est strictement supérieure à la première consigne d'accélération, la deuxième consigne d'accélération est égale au minimum entre la valeur d'accélération cible et une valeur d'accélération A(t) égale à :

$$A(t) = A(t\text{-}dt) + C_1{*}dt,$$

avec A(t-dt) la première consigne d'accélération, dt l'intervalle temporel séparant l'instant précédent et l'instant courant et $C_1$ une valeur de secousse supérieure à 0 et fonction de l'information représentative d'un niveau de dangerosité.

Selon une autre variante, lorsque la valeur d'accélération cible est inférieure ou égale à la première consigne d'accélération, la deuxième consigne d'accélération est égale au maximum entre la valeur d'accélération cible et une valeur d'accélération A(t) égale à :

$$A(t) = A(t\text{-}dt) + C_2{*}dt,$$

avec A(t-dt) la première consigne d'accélération, dt l'intervalle temporel séparant l'instant précédent et l'instant courant et $C_2$ une valeur de secousse inférieure à 0 et fonction de l'information représentative d'un niveau de dangerosité.

Selon une variante supplémentaire, l'information représentative d'un niveau de dangerosité est déterminée en fonction d'un temps restant avant collision entre le véhicule et l'objet mobile.

Selon encore une variante, l'information représentative d'un niveau de dangerosité est déterminée en fonction :

- d'un ensemble d'informations dynamiques de l'objet mobile comprenant une information représentative de vitesse de l'objet mobile, une information représentative d'accélération de l'objet mobile et une information représentative de distance entre le véhicule et l'objet mobile ; et
- d'un ensemble d'informations dynamiques du véhicule comprenant une information représentative de vitesse du véhicule et une information représentative d'accélération du véhicule.

Selon une variante additionnelle, la valeur de secousse est fonction d'une information représentative d'un niveau de dangerosité selon une fonction monotone croissante pour une valeur de secousse positive et selon une fonction monotone décroissante pour une valeur de secousse négative.

Selon l'invention, le procédé comprend en outre une étape de contrôle du système de régulation adaptative de vitesse en fonction de la deuxième consigne d'accélération.

Selon un deuxième aspect, l'invention concerne un dispositif de contrôle d'accélération d'un véhicule, le dispositif comprenant une mémoire associée à un processeur configuré pour la mise en oeuvre des étapes du procédé selon le premier aspect de l'invention.

Selon un troisième aspect, l'invention concerne un véhicule, par exemple de type automobile, comprenant le dispositif tel que décrit ci-dessus selon le deuxième aspect de l'invention.

Selon un quatrième aspect, l'invention concerne un programme d'ordinateur qui comporte des instructions adaptées pour l'exécution des étapes du procédé selon le premier aspect de l'invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, l'invention concerne un support d'enregistrement lisible par un ordinateur sur lequel est enregistré un programme d'ordinateur comprenant des instructions pour l'exécution des étapes du procédé selon le premier aspect de l'invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon l'invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

**Brève description des figures**

D'autres caractéristiques et avantages de l'invention ressortiront de la description des modes de réalisation non limitatifs de l'invention ci-après, en référence aux figures 1 à 4 annexées, sur lesquelles :

[Fig. 1] illustre schématiquement un véhicule suivant un autre véhicule, selon un exemple de réalisation particulier de la présente invention ;

[Fig. 2] illustre des fonctions représentant l'évolution d'une valeur de secousse en fonction d'un niveau de dangerosité de la situation dans laquelle se trouve le véhicule de la figure 1, selon un exemple de réalisation particulier de la présente invention ;

[Fig. 3] illustre schématiquement un dispositif configuré pour contrôler l'accélération du véhicule de la figure 1, selon un exemple de réalisation particulier de la présente invention.

[Fig. 4] illustre un organigramme des différentes étapes d'un procédé de contrôle de l'accélération du véhicule de la figure 1, selon un exemple de réalisation particulier de la présente invention.

**Description des modes de réalisation**

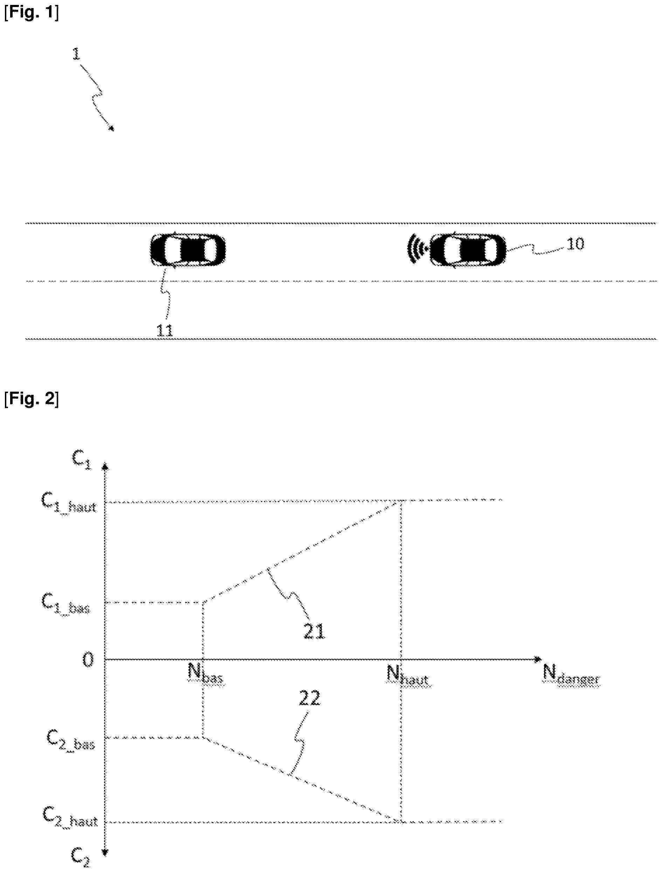

Un procédé et un dispositif de contrôle de l'accélération d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de l'invention, un calculateur, par exemple le calculateur en charge de contrôler le système ACC d'un véhicule, détermine une valeur d'accélération cible à un instant courant, par exemple en fonction d'une consigne de vitesse et/ou de distance ou temps inter-véhicule (TIV) (vis-à-vis d'un véhicule qui le précède sur la voie de circulation). La valeur d'accélération cible est par exemple déterminée à partir de données reçues d'au moins un capteur de détection d'objet embarqué dans le véhicule, ces données permettant d'obtenir la distance entre le véhicule et le véhicule qui le précède. La valeur d'accélération cible est comparée par le calculateur avec une première consigne d'accélération fournie au système de régulation adaptative de vitesse à un instant 't - dt' précédant l'instant courant 't', 'dt' correspondant par exemple au pas temporel séparant deux consignes d'accélérations successives temporellement. Une deuxième consigne d'accélération pour l'instant courant 't' est déterminée par le calculateur en fonction du résultat de la comparaison précédente. La deuxième consigne d'accélération est fonction d'un résultat de comparaison entre d'une part la valeur d'accélération cible et d'autre part la première consigne d'accélération modifiée en fonction d'une valeur variation d'accélération, aussi appelée valeur de secousse (de l'anglais « jerk »). La valeur de secousse est avantageusement fonction d'un niveau de dangerosité de la situation dans laquelle se trouve le véhicule par rapport au véhicule qui le précède.

La consigne d'accélération, par exemple fournie au système ACC, est ainsi modifiée ou filtrée via une valeur de secousse pour améliorer le confort du ou des passagers du véhicule, selon le niveau de dangerosité. Par exemple, lorsque la situation est déterminée comme étant non ou peu dangereuse (niveau de dangerosité faible), la valeur de secousse est faible et la consigne d'accélération cible est filtrée pour être plus faible, c'est-à-dire que l'accélération est plus douce pour atteindre la vitesse de consigne par exemple. A contrario, lorsque la situation est déterminée comme étant dangereuse (niveau de dangerosité élevé), la valeur de secousse est élevée et la consigne d'accélération cible est moins filtrée, voire non filtrée, pour être proche ou égale à la valeur d'accélération cible.

Un tel procédé permet de trouver un compromis entre le confort et la sécurité, le confort étant améliorée en diminuant la consigne d'accélération vis-à-vis de l'accélération cible lorsque le niveau de dangerosité est faible et la sécurité étant privilégiée (au détriment du confort si nécessaire) au fur et à mesure que le niveau de dangerosité augmente.

[Fig. 1] illustre schématiquement un véhicule 10 suivant un objet mobile 11, par exemple un véhicule 11, dans un environnement routier 1, selon un exemple de réalisation particulier et non limitatif de la présente invention.

La figure 1 illustre un véhicule 10, par exemple un véhicule automobile, embarquant un ou plusieurs capteurs configurés pour détecter la présence d'objets dans l'environnement 1 du véhicule 10. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond à un véhicule circulant sous la supervision totale d'un conducteur ou circulant dans un mode autonome ou semi-autonome. Le véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le véhicule 10 suit un véhicule 11, à une distance déterminée et pouvant varier dans le temps (en fonction du comportement dynamique du véhicule 10 et du véhicule 11), le véhicule 11 circulant sur une même voie de circulation dans la même direction que le véhicule 10. Selon une variante de réalisation, le véhicule 11 circule derrière le véhicule 10 ou sur un côté du véhicule 10, c'est-à-dire sur une voie de circulation parallèle à celle empruntée dans le véhicule 10, par exemple lorsque le véhicule 10 dépasse le véhicule 11 ou lorsque le véhicule 11 dépasse le véhicule 10.

Le véhicule 10 embarque par exemple un ou plusieurs des capteurs suivants :

- un ou plusieurs radars à ondes millimétriques arrangés sur le véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple le véhicule 11 situé devant le véhicule 10 selon l'exemple de la figure 1), dans le but de détecter des obstacles et leurs distances vis-à-vis du véhicule 10 ; et/ou
- un ou plusieurs LIDAR(s) (de l'anglais « Light Détection And Ranging », ou
  « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple le véhicule 11) situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du véhicule 10 se trouvant dans le champ de vision de la ou les caméras.

Les données obtenues de ce ou ces capteurs varient selon le type de capteur. Lorsqu'il s'agit d'un radar ou d'un LIDAR, les données correspondent par exemple à des données de distance entre des points de l'objet détecté et le capteur. Chaque objet détecté est ainsi représenté par un nuage de points (chaque point correspondant à un point de l'objet recevant le rayonnement émis par le capteur et réfléchissant au moins en partie ce rayonnement), le nuage de points représentant l'enveloppe (ou une partie de l'enveloppe) de l'objet détecté tel que vu par le capteur et in fine par le véhicule 10 embarquant le capteur. Lorsqu'il s'agit d'une caméra vidéo, les données correspondent à des données associées à chaque pixel de la ou les images acquises, par exemple des valeurs de niveaux de gris codés sur par exemple 8, 10, 12 ou plus de bits pour chaque canal couleur, par exemple RGB (de l'anglais « Red, Green, Blue » ou en français « Rouge, vert, bleu »). Ces données permettent par exemple de déterminer les positions successives prises par un objet se déplaçant dans l'environnement 1, par exemple le véhicule 11, et d'en déduire un ou plusieurs paramètres dynamiques de l'objet mobile tels que la vitesse et/ou l'accélération.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le véhicule 10. Un tel système ADAS est configuré pour assister, voire remplacer, le conducteur du véhicule 10 pour contrôler le véhicule 10 sur son parcours.

Selon un exemple, le véhicule 10 embarque un système ADAS correspondant à un système de régulation automatique de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation et/ou de maintenir une distance de sécurité déterminée vis-à-vis du véhicule 11 en amont du véhicule 10, c'est à dire d'un véhicule 11 circulant devant le véhicule 10 dans le même sens de circulation sur la même voie de circulation. Les données obtenues du ou des capteurs embarqués dans le véhicule 10 permettent au système ACC du véhicule 10 d'établir une valeur cible d'accélération $A_{cible}(t)$ au cours du temps 't'. L'accélération cible $A_{cible}(t)$ devient une consigne d'accélération $A_{consigne}(t)$ ou est modifiée pour donner une consigne d'accélération $A_{consigne}(t)$, comme cela sera expliqué ci-après. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du véhicule 10, notamment pour que ce(s) dernier(s) détermine(nt) les consignes de couple à générer par le groupe motopropulseur pour respecter les consignes d'accélération $A_{consigne}(t)$ et réguler la vitesse du véhicule 10.

Selon un autre exemple, le véhicule 10 embarque, par exemple en complément du système ACC, un système de détection de collision, par exemple par l'arrière, du véhicule 10, aussi appelé système pré-collision. Un tel système correspond par exemple à un système détectant l'arrivée d'un véhicule suiveur présentant un risque de collision par l'arrière du véhicule 10, ou encore à tout système de sécurité détectant un danger imminent pour le véhicule 10 et/ou mettant en oeuvre les moyens de sécurité embarqués à la suite d'une telle détection. La détection d'un risque de collision est par exemple obtenue en prédisant le comportement dynamique d'un véhicule arrivant par l'arrière, et entraîne par exemple l'exécution d'une ou plusieurs instructions de guidage telles qu'une instruction d'augmentation de vitesse et/ou une instruction de décalage sur la gauche ou la droite du véhicule 10.

Selon encore un autre exemple, le véhicule 10 embarque, par exemple en complément du système ACC et/ou du système de détection de collision, un système d'aide au changement de voie de circulation. La décision pour un changement de voie est par exemple basée sur la prédiction du véhicule 11, par exemple lorsque ce dernier se situe sur la voie sur laquelle le véhicule 10 souhaite se déporter.

Un processus de contrôle de l'accélération d'un véhicule, par exemple le véhicule 10 suivant le véhicule 11, est avantageusement mis en oeuvre par le véhicule 10, c'est-à-dire par un calculateur ou une combinaison de calculateurs du système embarqué du véhicule 10, par exemple par le ou les calculateurs en charge de contrôler le système ACC. A cet effet, une ou plusieurs consignes d'accélération sont déterminées via les opérations ou étapes décrites ci-dessous.

Dans une première opération, une valeur d'accélération cible est déterminée à un instant courant $t_0$, à partir d'un ensemble de données obtenues d'un ou plusieurs capteurs de détection d'objet embarqués dans le véhicule 10 et/ou de paramètres de consigne entrés par exemple par le conducteur ou déterminés à partir de données sur l'environnement du véhicule 10. La valeur d'accélération cible (exprimée en $m.s^{-2}$) est par exemple calculée à partir de :

- données représentatives du comportement dynamique du véhicule 11 (par exemple vitesse et/ou accélération), ces données étant par exemple obtenue à partir d'un ensemble de positions prises par le véhicule 11 sur un intervalle de temps précédant l'instant courant $t_0$ pour lequel est déterminée l'accélération cible. Les données sur les positions prises par le véhicule 11 sont avantageusement déterminées à partir des données reçues du ou des capteurs de détection d'objet embarqués dans le véhicule 10 ;
- données représentatives du comportement dynamique du véhicule 10 (par exemple vitesse, accélération, distance vis-à-vis du véhicule 11), ces données étant obtenues de capteurs embarqués dans le véhicule 10, la distance étant par exemple obtenue à partir des données reçues du ou des capteurs de détection d'objet ; et/ou
- paramètres de consignes fournis au système ACC, tels que par exemple une vitesse cible, une distance ou un temps inter-véhicule (DIV ou TIV) cible, ces paramètres étant enregistrés en mémoire, déterminés par analyse de l'environnement (par exemple la vitesse cible est déterminée par lecture des panneaux de limitation de vitesse ou à partir de données reçus d'un système de navigation) ou entrés par un utilisateur via une interface Homme-Machine, dite IHM.

Dans une deuxième opération, la valeur d'accélération cible obtenue ou déterminée à la première opération est comparée avec une valeur de consigne d'accélération antérieure, dite première consigne d'accélération. Cette première consigne d'accélération correspond avantageusement à la consigne d'accélération transmise au système ACC juste avant la fourniture d'une accélération de consigne courante, à l'instant $t_0$. Les consignes d'accélérations sont par exemple déterminées par le système ACC à intervalles de temps réguliers, un pas temporel régulier, dit 'dt', séparant deux consignes successives temporellement. Ainsi, si la consigne d'accélération courante faite à l'instant courant $t_0$ est dénommée $A(t_0)$, la première consigne d'accélération correspond à la consigne générée à l'instant $(t_0 - dt)$ et est dénommée $A(t_0-dt)$. De manière générale, une consigne d'accélération $A(t)$ générée à un instant 't' est précédée temporellement part une consigne d'accélération $A(t-dt)$ générée à un instant $(t - dt)$ et est suivie temporellement part une consigne d'accélération $A(t+dt)$ qui sera générée à un instant $(t + dt)$.

Le résultat de comparaison permet de déterminer si la valeur d'accélération cible est supérieure ou inférieure à la première consigne d'accélération.

Dans une troisième opération, une deuxième consigne d'accélération est déterminée en fonction du résultat de la comparaison réalisée à la deuxième opération. Cette deuxième consigne d'accélération est déterminée en fonction du résultat de la comparaison entre d'une part la valeur d'accélération cible et d'autre part la première consigne d'accélération modifiée en fonction d'une variation d'accélération, dite valeur de secousse (de l'anglais « jerk », aussi appelée valeur d'à-coup). Cette valeur de secousse est avantageusement déterminée en fonction d'une information représentative d'un niveau de dangerosité (ou de criticité) d'une situation dans laquelle se trouve le véhicule 10 vis-à-vis du véhicule 11. Une telle valeur est par exemple reçue d'une mémoire reliée ou associée au calculateur, cette valeur étant par exemple stockée dans un registre ou dans une table de correspondance, dite LUT (de l'anglais « Look-Up Table »). Une valeur de secousse correspond avantageusement à une grandeur représentant une variation de l'accélération dans le temps, exprimée en $m.s^{-3}$.

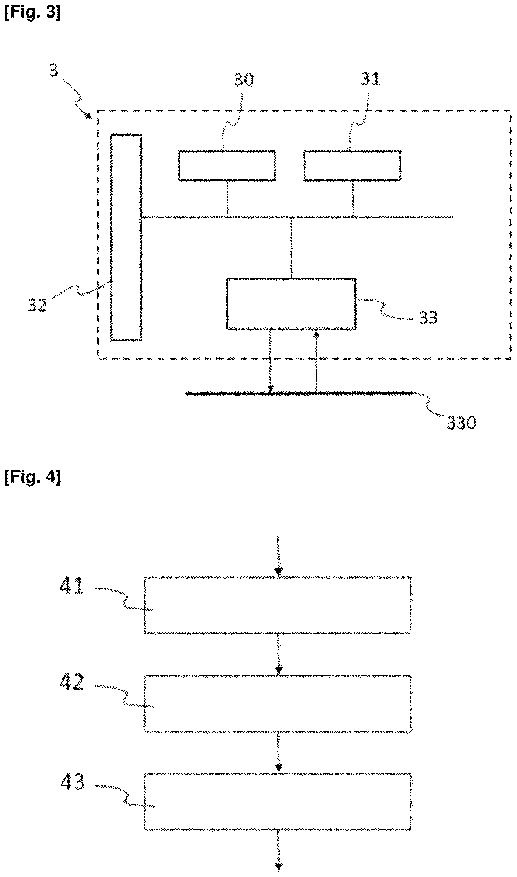

La valeur de secousse correspond par exemple à une fonction monotone croissante ou décroissante en fonction du niveau de dangerosité. Cette valeur de secousse appartient par exemple à un intervalle de valeurs comprises entre un niveau bas et niveau haut. Par exemple, une valeur de secousse (de l'anglais « jerk », aussi appelée valeur d'à-coup) est obtenue par le ou les calculateurs. La valeur de secousse est par exemple obtenue d'une LUT mettant en correspondance une valeur de secousse à chaque niveau de dangerosité (ou intervalle de niveaux de dangerosité) d'un ensemble comprenant plusieurs niveaux de dangerosité (ou respectivement plusieurs intervalles de niveaux de dangerosité). La figure 3 décrite ci-après fournit 2 exemples de l'évolution de la valeur de secousse en fonction du niveau de dangerosité de la situation.

Lorsque la valeur d'accélération cible est strictement supérieure à la première consigne d'accélération (c'est-à-dire lorsque $A_{cible}(t) > A(t\text{-}dt)$), la deuxième consigne d'accélération $A(t)$ est égale au minimum entre la valeur d'accélération cible et une valeur d'accélération $A(t)$ égale à :

$$A(t) = A(t\text{-}dt) + C_1{}^*dt,$$

Où $A(t\text{-}dt)$ correspond à la première consigne d'accélération, $dt$ correspond à l'intervalle temporel séparant l'instant précédent $(t\text{-}dt)$ et l'instant courant $t$ et $C_1$ correspond à une valeur de secousse positive ($C_1 > 0$) et fonction du niveau de dangerosité de la situation à l'instant $t$.

Dit autrement, lorsque la valeur d'accélération cible est strictement supérieure à la première consigne d'accélération (c'est-à-dire lorsque $A_{cible}(t) > A(t\text{-}dt)$), la deuxième consigne d'accélération $A(t)$ est égale à :

$$A(t) = \min(A_{cible}(t),\ A(t_0) + C_1{}^*dt).$$

Lorsque la valeur d'accélération cible est inférieure ou égale à la première consigne d'accélération (c'est-à-dire lorsque $A_{cible}(t) \leq A(t\text{-}dt)$), la deuxième consigne d'accélération $A(t)$ est égale au maximum entre la valeur d'accélération cible et une valeur d'accélération $A(t)$ égale à :

$$A(t) = A(t\text{-}dt) + C_2{}^*dt,$$

Où $A(t\text{-}dt)$ correspond à la première consigne d'accélération, $dt$ correspond à l'intervalle temporel séparant l'instant précédent $(t\text{-}dt)$ et l'instant courant $t$ et $C_2$ correspond à une valeur de secousse négative ($C_2 < 0$) et fonction du niveau de dangerosité de la situation à l'instant $t$.

Dit autrement, lorsque la valeur d'accélération cible est inférieure ou égale à la première consigne d'accélération (c'est-à-dire lorsque $A_{cible}(t) \leq A(t\text{-}dt)$), la deuxième consigne d'accélération $A(t)$ est égale à :

$$A(t) = \max(A_{cible}(t),\ A(t_0) + C_2{}^*dt).$$

Selon un premier exemple de réalisation, le niveau de dangerosité est déterminé en fonction d'un paramètre correspondant au temps restant avant collision, dit TTC (de l'anglais « Time-to-Collision »), le TTC étant calculé selon toute méthode connue de l'homme du métier, par exemple tel que décrit dans l'article intitulé « New Algorithms for Computing the Time-to-Collision in Freeway Traffic Simulation Models », de Jia Hou et al., publié le 31 décembre 2014 dans « Computational Intelligence and Neuroscience », volume 2014.

Selon ce premier exemple, le niveau de dangerosité est par exemple inversement proportionnel au TTC, c'est-à-dire que plus le TTC est faible, plus le niveau de dangerosité est élevé.

Selon un deuxième exemple de réalisation, le niveau de dangerosité est déterminé en fonction :

- d'un ensemble d'informations dynamiques du véhicule 11 comprenant la vitesse du véhicule 11, l'accélération du véhicule 11 et une information représentative de distance entre le véhicule et le véhicule 11 (par exemple la distance inter-véhicule, dite DIV, en mètres ou le temps inter-véhicule, dit TIV, en secondes) ; et
- d'un ensemble d'informations dynamiques du véhicule 10 comprenant la vitesse du véhicule 10, l'accélération du véhicule 10 et optionnellement une valeur de secousse maximale en fonction de la vitesse du véhicule 10.

A cet effet et selon ce deuxième exemple de réalisation, la distance $D(t)$ séparant le véhicule 10 du véhicule 11 en fonction du temps est déterminée, par exemple via l'équation suivante :

$$D(t) = [A_1(t)\text{-}A_2(t)] * t^2/2 + Vr^*t + Dist$$

Où :

$A_1(t)$ est l'accélération du véhicule 11 en fonction du temps,
$A_2(t)$ est l'accélération du véhicule 10 en fonction du temps,

Vr est la vitesse relative du véhicule 11 par rapport à celle du véhicule 10 et

Dist est la distance entre le véhicule 10 et le véhicule 11, en mètres.

Une surface critique est définie en intégrant la distance D(t) définie ci-dessus sur un intervalle de temps déterminé.

Pour obtenir le niveau de dangerosité, cette surface critique est comparée à une surface de référence correspondant à l'intégration d'une distance minimale sur l'intervalle de temps déterminé.

La distance minimale $D_{min}$ entre le véhicule 10 et le véhicule 11 est par exemple déterminée en fonction de la durée d'un intervalle de temps préétabli, i.e. le temps inter-véhicule spécifié par le conducteur ou le système, et de la vitesse du véhicule 11 comme suit :

si le temps inter-véhicule est égale à 1s, alors

$$D_{min} = \max((0,7 * \text{vitesse absolue du véhicule 11}), 1) ;$$

si le temps inter-véhicule est égal à 1.5s, alors

$$D_{min} = \max((1 * \text{vitesse absolue du véhicule 11}), 1) ;$$

sinon,

$$D_{min} = \max((1,3 * \text{vitesse absolue du véhicule 11}), 1).$$

Une distance critique dépendant de la distance minimale $D_{min}$, d'un paramètre correctif préétabli et de la vitesse du véhicule 11 est alors déterminée. Plus spécifiquement, la distance critique, $D_{crit}$, et la surface de référence, $S_{ref}$, sont définies de telle sorte que :

$$D_{crit} = D_{min} - K_1 * \text{Vitesse absolue du véhicule 11}$$

où $K_1$ est un premier paramètre correctif préétabli ; et

$$S_{ref} = 4/3 * D_{crit} * \sqrt{|2 * D_{crit}/K_2|}$$

où $K_2$ est un deuxième paramètre correctif préétabli.

L'information représentative du niveau de dangerosité $N_{danger}$ est obtenue via l'équation suivante :

$$N_{danger} = S_{crit} / S_{ref}$$

Dans une quatrième opération, un ou plusieurs systèmes ADAS du véhicule 10, par exemple le système ACC, sont contrôlés en fonction de la deuxième consigne d'accélération obtenue à la troisième opération.

[Fig. 2] illustre des fonctions de la valeur de secousse C en fonction du niveau de dangerosité $N_{danger}$, selon un exemple de réalisation particulier et non limitatif de la présente invention.

La figure 2 illustre une première courbe 21 montrant les valeurs prises par la valeur de secousse $C_1$ en fonction du niveau de dangerosité (ou de criticité) $N_{danger}$, c'est-à-dire lorsque la valeur de secousse est supérieure à 0. La courbe 21 comprend par exemple 3 parties :

- une première partie où $C_1$ prend une première valeur $C_{1\_bas}$, par exemple égale à 1 m.s$^{-3}$, lorsque le niveau de dangerosité est inférieur à un premier seuil $N_{bas}$, par exemple égal à 0.2 ;
- une deuxième partie où $C_1$ correspond à une fonction linéaire croissante, $C_1$ étant compris entre la première valeur $C_{1\_bas}$ et une deuxième valeur $C_{1\_haut}$, par exemple égale à 3 m.s$^{-3}$, $C_{1\_bas}$ étant associé à $N_{bas}$ et $C_{1\_haut}$ étant associé à un deuxième seuil $N_{haut}$ du niveau de danger, par exemple égal à 0.9 ; et
- une troisième partie où $C_1$ prend la deuxième valeur $C_{1\_haut}$ lorsque le niveau de dangerosité est supérieur au

deuxième seuil $N_{haut}$.

La figure 2 illustre une deuxième courbe 22 montrant les valeurs prises par la valeur de secousse $C_2$ en fonction du niveau de dangerosité (ou de criticité) $N_{danger}$, c'est-à-dire lorsque la valeur de secousse est inférieure à 0. La courbe 22 comprend par exemple 3 parties :

-   une première partie où $C_2$ prend une première valeur $C_{2\_bas}$, par exemple égale à -1 m.s⁻³, lorsque le niveau de dangerosité est inférieur au premier seuil $N_{bas}$, par exemple égal à 0.2 ;
-   une deuxième partie où $C_2$ correspond à une fonction linéaire décroissante, $C_2$ étant compris entre la première valeur $C_{2\_bas}$ et une deuxième valeur $C_{2\_haut}$, par exemple égale à -6 m.s⁻³, $C_{2\_bas}$ étant associé à $N_{bas}$ et $C_{2\_haut}$ étant associé au deuxième seuil $N_{haut}$ du niveau de danger, par exemple égal à 0.9 ; et
-   une troisième partie où $C_2$ prend la deuxième valeur $C_{2\_haut}$ lorsque le niveau de dangerosité est supérieur au deuxième seuil $N_{haut}$.

[Fig. 3] illustre schématiquement un dispositif 3 configuré pour contrôler l'accélération d'un véhicule, par exemple le véhicule 10, selon un exemple de réalisation particulier et non limitatif de la présente invention. Le dispositif 3 correspond par exemple à un dispositif embarqué dans le véhicule 10, par exemple un calculateur.

Le dispositif 3 est par exemple configuré pour la mise en oeuvre des opérations décrites en regard des figure 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels. Selon différents modes de réalisation particuliers, le dispositif 3 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon un mode de réalisation particulier et non limitatif, le dispositif 3 comprend un bloc 32 d'éléments d'interface pour communiquer avec des dispositifs externes, par exemple un serveur distant ou le « cloud », d'autres véhicules. Les éléments d'interface du bloc 32 comprennent une ou plusieurs des interfaces suivantes :

-   interface radiofréquence RF, par exemple de type Bluetooth® ou Wi-Fi®, LTE (de l'anglais « Long-Term Evolution » ou en français « Evolution à long terme »), LTE-Advanced (ou en français LTE-avancé) ;
-   interface USB (de l'anglais « Universal Serial Bus » ou « Bus Universel en Série » en français) ;
-   interface HDMI (de l'anglais « High Definition Multimedia Interface », ou « Interface Multimedia Haute Définition » en français) ;
-   interface LIN (de l'anglais « Local Interconnect Network », ou en français « Réseau interconnecté local »).

Selon un autre mode de réalisation particulier, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 3 peut fournir des signaux de sortie à un ou plusieurs dispositifs externes, tels qu'un écran d'affichage, un ou des haut-parleurs et/ou d'autres périphériques via respectivement des interfaces de sortie non représentées.

[Fig. 4] illustre un organigramme des différentes étapes d'un procédé de contrôle de l'accélération d'un véhicule, par exemple le véhicule 10, selon un exemple de réalisation particulier et non limitatif de la présente invention. Le procédé est par exemple mis en oeuvre par un dispositif embarqué dans le véhicule 10 ou par le dispositif 3 de la figure 3.

Dans une première étape 41, une valeur d'accélération cible est déterminée à un instant courant, cette valeur d'accélération cible étant destinée à un système de régulation adaptative de vitesse du véhicule. La valeur d'accélération cible est déterminée à partir de données représentatives d'un objet mobile, par exemple un véhicule, situé à une distance déterminée devant le véhicule, les données étant reçues d'au moins un capteur de détection d'objet embarqué dans le véhicule.

Dans une deuxième étape 42, la valeur d'accélération cible est comparée avec une première consigne d'accélération fournie au système de régulation adaptative de vitesse à un instant précédant l'instant courant.

Dans une troisième étape 43, une deuxième consigne d'accélération est déterminée pour l'instant courant en fonction d'un résultat de la comparaison. La deuxième consigne d'accélération est fonction d'un résultat de comparaison entre d'une part la valeur d'accélération cible et d'autre part la première consigne d'accélération modifiée en fonction d'une variation d'accélération, dite valeur de secousse. Cette valeur de secousse est avantageusement fonction d'une information représentative d'un niveau de dangerosité d'une situation dans laquelle se trouve le véhicule vis-à-vis de l'objet mobile.

Selon une variante de réalisation, les variantes et exemples des opérations décrits en relation avec la figure 1 s'appliquent aux étapes du procédé de la figure 4.

Bien entendu, l'invention ne se limite pas aux modes de réalisation décrits ci-avant mais s'étend à un procédé de prédiction de contrôle d'un véhicule, ainsi qu'au dispositif configuré pour la mise en oeuvre d'un tel tels que définis par les revendications.

L'invention concerne également un véhicule, par exemple automobile ou plus généralement un véhicule autonome à moteur terrestre, comprenant le dispositif 3 de la figure 3.

**Revendications**

1. Procédé de contrôle d'accélération d'un véhicule (10), ledit procédé étant mis en oeuvre par au moins un calculateur (3) embarqué dans ledit véhicule (10) et comprenant les étapes suivantes :

   - détermination (41) d'une valeur d'accélération cible à un instant courant destinée à un système de régulation adaptative de vitesse dudit véhicule (10), ladite valeur d'accélération cible étant déterminée à partir de données représentatives d'un objet mobile (11) à une distance déterminée devant ledit véhicule (10), lesdites données étant reçues d'au moins un capteur de détection d'objet embarqué dans ledit véhicule (10) ;
   - comparaison (42) de ladite valeur d'accélération cible avec une première consigne d'accélération fournie audit système de régulation adaptative de vitesse à un instant précédant ledit instant courant ;
   - détermination (43) d'une deuxième consigne d'accélération pour ledit instant courant en fonction d'un résultat de ladite comparaison (42), ladite deuxième consigne d'accélération étant fonction d'un résultat de comparaison entre d'une part ladite valeur d'accélération cible et d'autre part la première consigne d'accélération modifiée en fonction d'une variation d'accélération, dite valeur de secousse, ladite valeur de secousse étant fonction d'une information représentative d'un niveau de dangerosité d'une situation dans laquelle se trouve ledit véhicule (10) vis-à-vis dudit objet mobile (11) ;

   le procédé comprenant en outre une étape de contrôle dudit système de régulation adaptative de vitesse en fonction de la deuxième consigne d'accélération.

2. Procédé selon la revendication 1, pour lequel, lorsque ladite valeur d'accélération cible est strictement supérieure à ladite première consigne d'accélération, la deuxième consigne d'accélération est égale au minimum entre ladite valeur d'accélération cible et une valeur d'accélération A(t) égale à :

$$A(t) = A(t-dt) + C_1 * dt,$$

   avec $A(t-dt)$ la première consigne d'accélération, $dt$ l'intervalle temporel séparant l'instant précédent et l'instant courant et $C_1$ une valeur de secousse supérieure à 0 et fonction de l'information représentative d'un niveau de dangerosité.

3. Procédé selon la revendication 1 ou 2, pour lequel, lorsque ladite valeur d'accélération cible est inférieure ou égale à ladite première consigne d'accélération, la deuxième consigne d'accélération est égale au maximum entre ladite valeur d'accélération cible et une valeur d'accélération A(t) égale à :

$$A(t) = A(t\text{-}dt) + C_2{}^*dt,$$

avec A(t-dt) la première consigne d'accélération, dt l'intervalle temporel séparant l'instant précédent et l'instant courant et $C_2$ une valeur de secousse inférieure à 0 et fonction de l'information représentative d'un niveau de dangerosité.

4. Procédé selon l'une des revendications 1 à 3, pour lequel ladite information représentative d'un niveau de dangerosité est déterminée en fonction d'un temps restant avant collision entre ledit véhicule (10) et ledit objet mobile (11).

5. Procédé selon l'une des revendications 1 à 4, pour lequel ladite information représentative d'un niveau de dangerosité est déterminée en fonction :

   - d'un ensemble d'informations dynamiques dudit objet mobile (11) comprenant une information représentative de vitesse dudit objet mobile (11), une information représentative d'accélération dudit objet mobile (11) et une information représentative de distance entre ledit véhicule (10) et ledit objet mobile (11) ; et
   - d'un ensemble d'informations dynamiques dudit véhicule (10) comprenant une information représentative de vitesse dudit véhicule (10) et une information représentative d'accélération dudit véhicule (10).

6. Procédé selon l'une des revendications 1 à 5, pour lequel ladite valeur de secousse est fonction d'une information représentative d'un niveau de dangerosité selon une fonction monotone croissante pour une valeur de secousse positive et selon une fonction monotone décroissante pour une valeur de secousse négative.

7. Dispositif (3) de contrôle d'accélération d'un véhicule (10), ledit dispositif (3) comprenant une mémoire (31) associée à au moins un processeur (30) configuré pour la mise en oeuvre des étapes du procédé selon l'une quelconque des revendications 1 à 6.

8. Véhicule (10) comprenant le dispositif (3) selon la revendication 7.

9. Produit programme d'ordinateur comportant des instructions adaptées pour l'exécution des étapes du procédé selon l'une des revendications 1 à 6, lorsque le programme d'ordinateur est exécuté par au moins un processeur.

**Patentansprüche**

1. Verfahren zur Steuerung der Beschleunigung eines Fahrzeugs (10), wobei das Verfahren von mindestens einem in das Fahrzeug (10) eingebetteten Computer (3) ausgeführt wird und die folgenden Schritte umfasst:

   - Bestimmung (41) eines Zielbeschleunigungswerts zu einem aktuellen Zeitpunkt für ein adaptives Geschwindigkeitsregelsystem des Fahrzeugs (10), wobei der Zielbeschleunigungswert anhand von Daten bestimmt wird, die für ein sich bewegendes Objekt (11) in einer bestimmten Entfernung vor dem Fahrzeug repräsentativ sind Fahrzeug (10), wobei die Daten von mindestens einem Objekterkennungssensor empfangen werden, der in das Fahrzeug (10) eingebettet ist;
   - Vergleich (42) des Zielbeschleunigungswerts mit einem ersten Beschleunigungssollwert, der dem adaptiven Geschwindigkeitsregelungssystem zu einem Zeitpunkt vor der aktuellen Zeit zur Verfügung gestellt wird;
   - Bestimmung (43) eines zweiten Beschleunigungssollwerts für die aktuelle Zeit auf der Grundlage eines Vergleichsergebnisses (42), wobei der zweite Beschleunigungssollwert eine Funktion eines Vergleichsergebnisses zwischen dem Zielbeschleunigungswert einerseits und dem erste Beschleunigungsanweisung, die entsprechend einer Variation der Beschleunigung, der als Schüttelwert bekannt ist, modifiziert wird, wobei der Schüttelwert eine Funktion von Informationen ist, die für den Gefährlichkeitsgrad einer Situation repräsentativ sind, in der sich das Fahrzeug befindet (10) in Bezug auf das sich bewegende Objekt (11);

   Das Verfahren umfasst ferner einen Schritt zum Steuern des adaptiven Geschwindigkeitsregelungssystems basierend auf dem zweiten Beschleunigungssollwert.

2. Verfahren nach Anspruch 1, wobei in Fällen, in denen der Ziel-Beschleunigungswert streng größer als der erste Beschleunigungssollwert ist, der zweite Beschleunigungs-Sollwert gleich dem Minimum zwischen dem Ziel-Beschleunigungswert und einem Beschleunigungswert A(t) gleich ist:

$$A(t) = A(t-dt) + C_1 * dt,$$

wobei A(t-dt) der erste Beschleunigungssollwert ist, dt das Zeitintervall zwischen der vorherigen und der aktuellen Zeit und $C_1$ einen Schüttelwert größer als 0 und eine Funktion der Information, die für einen Gefährlichkeitsgrad repräsentativ ist.

3. Verfahren nach Anspruch 1 oder 2, wobei in Fällen, in denen der Zielbeschleunigungswert kleiner oder gleich dem ersten Beschleunigungssollwert ist, der zweite Beschleunigungssollwert gleich dem Maximum zwischen dem Zielbeschleunigungswert und einem Beschleunigungswert A(t) gleich ist:$A(t) = A(t-dt) + C_2 * dt,$
wobei A(t-dt) der erste Beschleunigungssollwert ist, dt das Zeitintervall zwischen der vorherigen und der aktuellen Zeit und $C_2$ ein Schüttelwert kleiner als 0 und eine Funktion der Information, die für einen Gefährlichkeitsgrad repräsentativ ist.

4. Verfahren nach einem der Ansprüche 1 bis 3, wobei die für einen Gefahrengrad repräsentative Information auf der Grundlage einer verbleibenden Zeit vor dem Zusammenstoß zwischen dem Fahrzeug (10) und dem sich bewegenden Objekt (11) bestimmt wird.

5. Verfahren nach einem der Ansprüche 1 bis 4, wobei die Information, die einen Gefährlichkeitsgrad darstellt, bestimmt wird nach:

   - einem Satz dynamischer Informationen des bewegten Objekts (11), bestehend aus Informationen, die für die Geschwindigkeit des bewegten Objekts (11) repräsentativ sind, Informationen, die für die Beschleunigung des bewegten Objekts (11) repräsentativ sind, und Informationen, die für den Abstand zwischen dem Fahrzeug (10) und dem bewegten Objekt (11) repräsentativ sind; und
   - ein Satz dynamischer Informationen des Fahrzeugs (10), der Informationen umfasst, die für die Geschwindigkeit des Fahrzeugs (10) repräsentativ sind, und Informationen, die für die Beschleunigung des Fahrzeugs (10) repräsentativ sind.

6. Verfahren nach einem der Ansprüche 1 bis 5, wobei der Schüttelwert eine Funktion von Informationen ist, die für ein Gefahrenniveau repräsentativ sind, das einer zunehmenden monotonen Funktion für einen positiven Schüttelwert und einer abnehmenden monotonen Funktion für einen negativen Schüttelwert entspricht.

7. Vorrichtung (3) zum Steuern der Beschleunigung eines Fahrzeugs (10), wobei die Vorrichtung (3) einen Speicher (31) umfasst, der mindestens einem Prozessor (30) zugeordnet ist, der zum Ausführen der Verfahrensschritte gemäß einem der Ansprüche 1 bis 6 konfiguriert ist.

8. Fahrzeug (10), umfassend die Vorrichtung (3) nach Anspruch 7.

9. Computerprogramm, das geeignete Anweisungen zum Ausführen der Verfahrensschritte nach einem der Ansprüche 1 bis 6 enthält, wobei das Computerprogramm von mindestens einem Prozessor ausgeführt wird.

**Claims**

1. A method for controlling the acceleration of a vehicle (10), said method being carried out by at least one computer (3) embedded in said vehicle (10) and comprising the following steps:

   - determination (41) of a target acceleration value at a current time for an adaptive speed control system said vehicle (10), said target acceleration value being determined from data representative of a moving object (11) at a specified distance in front of said vehicle (10), said data being received from at least one object detection sensor embedded in said vehicle (10);
   - comparison (42) of said target acceleration value with a first acceleration setpoint provided to said adaptive speed control system at a time preceding said current time;

- determination (43) of a second acceleration setpoint for said current time based on a result of said comparison (42), said second acceleration setpoint being a function of a comparison result between, on the one hand, said target acceleration value and, on the other hand, the first acceleration instruction modified according to a variation in acceleration, known as the shaking value, said shaking value being a function of information representative of a level of dangerousness of a situation in which said vehicle finds itself (10) in relation to said moving object (11);

the method further comprising a step for controlling said adaptive speed control system based on the second acceleration setpoint.

2.   A method according to claim 1, wherein, where said target acceleration value is strictly greater than said first acceleration setpoint, the second acceleration setpoint is equal to the minimum between said target acceleration value and an acceleration value A(t) equal to:

$$A(t) = A(t-dt) + C_1 * dt,$$

where A(t-dt) is the first acceleration setpoint, dt the time interval between the previous and the current time and $C_1$ a shaking value greater than 0 and a function of the information representative of a level of dangerousness.

3.   A method according to claim 1 or 2, wherein, where said target acceleration value is less than or equal to said first acceleration setpoint, the second acceleration setpoint is equal to the maximum between said target acceleration value and an acceleration value A(t) equal to:A(t) = A(t-dt) + $C_2$*dt,
where A(t-dt) is the first acceleration setpoint, dt the time interval between the previous and the current time and $C_2$ a shaking value less than 0 and a function of the information representative of a level of dangerousness.

4.   A method according to one of claims 1 to 3, wherein said information representative of a level of hazardousness is determined on the basis of a time remaining before collision between said vehicle (10) and said moving object (11).

5.   A method according to one of claims 1 to 4, for which said information representing a level of dangerousness is determined according to:

- a set of dynamic information of said moving object (11) comprising information representative of the speed of said moving object (11), information representative of acceleration of said moving object (11) and information representative of distance between said vehicle (10) and said moving object (11); and
- a set of dynamic information of said vehicle (10) comprising information representative of the speed of said vehicle (10) and information representative of acceleration of said vehicle (10).

6.   A method according to one of claims 1 to 5, wherein said shaking value is a function of information representative of a level of hazardity according to an increasing monotonic function for a positive shaking value and according to a decreasing monotonic function for a negative shaking value.

7.   A device (3) for controlling the acceleration of a vehicle (10), said device (3) comprising a memory (31) associated with at least one processor (30) configured for carrying out the process steps according to any one of claims 1 to 6.

8.   A vehicle (10) comprising the device (3) according to claim 7.

9.   A computer program containing suitable instructions for carrying out the process steps according to any of claims 1 to 6, where the computer program is executed by at least one processor.

[Fig. 1]

[Fig. 2]

[Fig. 3]

[Fig. 4]

## RÉFÉRENCES CITÉES DANS LA DESCRIPTION

**Documents brevets cités dans la description**

- US 2015291163 A1
- EP 3604066 A1
- US 2015307100 A1
- EP 3335955 A1

**Littérature non-brevet citée dans la description**

- New Algorithms for Computing the Time-to-Collision in Freeway Traffic Simulation Models. **DE JIA HOU et al.** Computational Intelligence and Neuroscience. 31 Décembre 2014, vol. 2014